(19) Europäisches Patentamt
European Patent Office
Office européen des brevets

(11) **EP 4 280 473 A1**

(12) **EUROPEAN PATENT APPLICATION**

(43) Date of publication:
**22.11.2023 Bulletin 2023/47**

(21) Application number: **22174623.3**

(22) Date of filing: **20.05.2022**

(51) International Patent Classification (IPC):
*H04B 7/185* (2006.01)   *H04L 45/00* (2022.01)
*H04W 40/00* (2009.01)   *H04L 45/24* (2022.01)

(52) Cooperative Patent Classification (CPC):
**H04B 7/18506; H04L 45/24**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Airbus S.A.S.**
**31060 Toulouse (FR)**

(72) Inventors:
• **SCHUPKE, Dominic**
**82024 Taufkirchen (DE)**
• **DUHOVNIKOV, Svetoslav**
**82024 Taufkirchen (DE)**

(54) **METHOD FOR ESTABLISHING A MULTIPATH COMMUNICATION WITH MAXIMIZED AVAILABILITY**

(57)    A method for establishing a communication through multiple distinct communication paths deployed over different network operators is proposed, comprising the steps collecting of location information of network nodes of several available distinct paths between a source node and a destination node, comparing location information of the network nodes to identify possibly co-located network nodes, determining of path segment lengths of consecutive path segments between the nodes of each path, estimating whether path segments of the paths intersect based on the locations of the network nodes and the path segment lengths, selecting of multiple paths that do not comprise intersecting path segments and/or co-located network nodes, and establish a communication between the source node and the destination node over both selected paths.

Fig. 1

EP 4 280 473 A1

**Description**

Technical field

The invention relates to a method for establishing a communication through multiple distinct communication paths deployed over different network operators, a system for establishing a communication through multiple distinct communication paths deployed over different network operators and a vehicle system.

Background of the invention

Vehicles, in particularly unmanned aerial vehicles, that are either remotely piloted and/or rely on a high level of autonomy may be equipped with a communication system to contribute to achieving a desired design assurance level for specific vehicle functions, reducing the on-board autonomy system complexity by the help of ground system elements. Such a communication system may be composed of airborne and ground segments that connect the flying vehicle and a ground station, e.g. either air traffic control or aircraft operation center. Ground sub-networks providing availability higher than 99.999% exist, but similar values are not known to be delivered by network operators for the wireless segment, for example SATCOM service.

It is known to use multi-technology/multi-link communication networks for a communication with improved availability and safety. However, using commercially available communication paths cannot guarantee that a single failure of network equipment will not simultaneously affect multiple communication paths, as network operators usually do not share topology and routing/configuration information of their networks.

Summary of the invention

It is thus an object of the invention to propose a method for establishing a communication through multiple paths with an improved availability and a reduced failure probability.

This object is met by a method for establishing a communication having the features of claim 1. Advantageous embodiments and further improvements may be gathered from the subclaims and the following description.

A method for establishing a communication through multiple distinct communication paths deployed over different network operators is proposed, comprising the steps collecting of location information of network nodes of several available distinct paths between a source node and a destination node, comparing location information of the network nodes to identify possibly co-located network nodes, determining of path segment lengths of consecutive path segments between the nodes of each path, estimating whether path segments of the paths intersect based on the locations of the network nodes and the path segment lengths, selecting of multiple paths that do not comprise intersecting path segments and/or co-located network nodes and/or co-sharing path segments, and establish a communication between the source node and the destination node over both selected paths.

For explaining the concept according to the invention, the above-mentioned features as well as relevant aspects of communication paths are discussed in the following. Network resilience is defined as the ability of a network to provide and maintain a predefined level of service availability in the face of unexpected events and faults in its nominal operation. To avoid service disruption by a single source of failure and thereby to increase its availability, the underlying infrastructure is usually configured to operate over multiple disjoint communication routes. Still, for example if overlay links of these disjoint paths are routed over the same network resource, e.g. an optical fiber duct, they will fail at the same time upon the event of the resource, e.g. an outage caused by an excavator cutting the fibers within the duct. Especially, if a service is designed and implemented over multiple network operators, in order to meet the availability requirements, it cannot be guaranteed that single failure events will not affect the service of all operators at the same time. Examples include, but are not limited to, services routed through fibers owned by different operators that are, however, routed through the same tunnel or over the same bridge.

The method according to the invention allows to ensure that service availability can be met in the event of network outages that can affect several of the network operators involved in the service deployment in order to support flying vehicle autonomy and a superior safety of flight. However, the method may also be used for other communication applications with a high demand of availability.

To provide a highly available communication service, exemplarily over a mix of wireless and wired links, disjoint path routing approaches are used to cope with multiple failure scenarios. This is achieved using a set of k link or node disjoint paths, wherein k >= 2. If information about Shared Risk Resource Groups or shared risk groups (SRGs) are available, a calculation of an SRG-disjoint path pair allows to protect a connection against a common failure of a set of resources in any SRG. Also, if such information is not provided, the method according to the invention is capable of detecting such shared risks for communication paths deployed over different network operators.

The availability of a system is based on the operation of a set of distinct subsystems that connected to obtain an intended function. Reliability is defined as the probability that a system performs its intended function for a specified period of time under a given conditions and the availability is the probability that a system can be used at a given time instant. The availability (A) is a feature of restorable systems and its components and it is defined as:

$$A = \frac{MTTF}{MTTF+MTTR},$$

where MTTF is the mean time to failure and MTTR is the mean time to repair.

The availability of an end-to-end service from a source to a destination is calculated based on the availability values of the subsystems/components that compose the end-to-end path. If a service is deployed over multiple network operators, it is usually impossible to identify elements of the information paths that can fail simultaneously, as operator network configuration, routing strategies and underlying physical topology are not disclosed. The method according to the invention is capable of identifying shared risks in multi-operator environment. It is assumed that in intermediate network nodes network functions (NF) are deployed.

NF or network function virtualization is a network architecture concept that uses the technologies of IT virtualization to virtualize entire classes of network node functions into building blocks that create communication services. For example, the fifth generation (5G) mobile networks introduce a new paradigm of network automation that is enabled and can be implemented by cloud computing and network function virtualization (NFV). On the one hand, computation resources are available where needed and they are coming closer to the end user through Multi-access Edge Computing (MEC) technology. On the other hand, NFV enables the flexible and on-the-fly creation and placement of both application and network functions, aiming at satisfying the diverse application requirements and optimizing the management of the heterogeneous (network, computational and storage) resources.

The Open Network Automation Platform (ONAP) is the part of the larger Network Function Virtualization/Software Defined Network (NFV/SDN) ecosystem that is responsible for the efficient control, operation, and management of Virtual Network Function (VNF) capabilities and functions. It specifies standardized abstractions and interfaces that enable efficient interoperation of the NVF/SDN ecosystem components. It is supported by main mobile operators, is deployed in several commercial cellular networks, and multiple vendors provide ONAP support and integration in their products. The ONAP platform enables product/service independent capabilities for design, creation, and runtime lifecycle management of resources in the NFV/SDN environment. These capabilities are provided using two major architectural frameworks, i.e. a Design Time Framework to design, define and program the platform, and a Runtime Execution Framework to execute the logic programmed in the design environment. The platform delivers an integrated information model based on the VNF package to express the characteristics and behavior of these resources in the Design Time Framework. The information model is utilized by Runtime Execution Framework to manage the runtime lifecycle of the VNFs. The management processes are orchestrated across various modules of ONAP to instantiate, configure, scale, monitor, and reconfigure the VNFs using a set of standard APIs provided by the VNF developers.

It is advantageous to deploy network functions in selectable nodes. The network functions may be able to generate and provide location data via an application programmable interface (API) through Global Navigation Satellite System (GNSS). This may be done in the method step of collecting of location information of the network nodes. This allows to conduct a primary check whether intermediate nodes along multiple communication paths are co-located. If this is the case, they may possibly share resources, which may decrease the overall availability. By comparing location information of the network nodes it is possible to rule out co-located and probably identical nodes or nodes that are integrated into identical network equipment. By ruling out these co-located nodes, the availability of the selected communication paths is increased and a single failure of a network equipment does not affect multiple communication paths

Every communication path comprises at least one path segment. The path segment is to be understood a section or part of the path that is located between two consecutive nodes. In a simple case, the start and destination nodes merely enclose a single path segment. However, it is likely that with expected distances between the start and destination nodes a plurality of intermediate network nodes are present as well as a plurality of path consecutive segments enclosed by consecutive pairs of nodes.

According to the invention, the path segment lengths are determined. In combination with knowledge about the location of the nodes of the distinct paths it can be estimated whether path segments intersect, which may be an indication of at least partially sharing the same network equipment. The distance between two nodes may exemplarily be estimated based on the location data, e.g., using Euclidean distance or an Earth-surface-based approximation. However, also a transmission delay measurement may be performed, from which an estimation of the physical route length can be calculated, e.g., an upper bound is obtained by assuming propagation delay only.

To establish a highly available communication over multiple distinct paths, suitable end-to-end routes can be set up by selecting node pairs that are surely diverse, i.e. that do not contain co-located nodes and shared or intersecting path segments.

In an advantageous embodiment, the collecting of location information of network nodes comprises querying the respective nodes for location information. As explained above, the network nodes may be equipped with an API that allows to retrieve desired information. If the available network nodes comprise geo-information, it is simple to receive and collect location information for further proceeding in the method.

In an advantageous embodiment, the determining of path segment lengths comprises measuring a transmission delay along the respective path segment. The distance between two consecutive nodes in a path segment is determined by the product of propagation delay and propagation speed in the signal transferring medium used in the path segment. For example, the propagation speed in a copper cable is about $2.3 \times 10^8$ m/s, while in an optical fiber it is about $2.0 \times 10^8$ m/s.

In an advantageous embodiment, determining of path segment lengths comprises calculating a distance between consecutive nodes of the respective path segments. This may be conducted alone or in combination with measuring the transmission delay. In a simple case, the path segments are completely straight. If two distinct path segments are analyzed that are directly connected to a start node or a destination node, it is conceivable that they are diverse if the measured path segment lengths equal the calculated distances between the respective nodes.

In an advantageous embodiment, the method further comprises calculating a ratio of the sum of distances between a common node and multiple connected, distanced nodes and the sum of respective path segment lengths, wherein it is assumed that the path segments are non-sharing if the ratio is greater than 0,9. Hence, as explained above, the measured path segment lengths equal or almost the calculated distances between the respective nodes and co-sharing path segments can be ruled out. The ratio may furthermore be in a range of 0,85 to 0,95.

In an advantageous embodiment, the selecting of multiple paths additionally comprises determining a total path length and/or expected signal attenuation and/or signal latency as a cost factor for each available path and minimizing the cost factor when selecting the multiple paths. Besides the availability itself also a communication quality can be maximized through a cost-optimizing function.

In analogy, the invention relates to a system for establishing a communication through multiple distinct communication paths deployed over different network operators, comprising a start node and a destination node, wherein each of the start node and the destination node comprises at least one communication device adapted for establishing a communication between the source node and the destination node over multiple paths, wherein each of the start node and the destination node comprises a control unit, wherein at least one of the control units is designed for collecting of location information of network nodes of several available distinct paths between the source node and the destination node, comparing location information of the network nodes to identify possibly co-located network nodes, determining of path segment lengths of consecutive path segments between the nodes of each path, estimating whether path segments of the paths intersect based on the locations of the network nodes and the path segment lengths, and selecting multiple paths, through which the communication is to be established, that do not comprise intersecting path segments and/or co-located network nodes and/or co-sharing path segments.

The control units preferably are capable of connecting to the network nodes through the above-identified API that allows to interact with network functions of the network nodes in order to conduct the above-identified steps of the method.

In an advantageous embodiment, the collecting of location information of network nodes comprises querying the respective nodes for location information through the at least one control unit.

In an advantageous embodiment, the determining of path segment lengths comprises measuring a transmission delay along the respective path segment through the at least one control unit.

In an advantageous embodiment, the determining of path segment lengths comprises calculating a distance between consecutive nodes of the respective path segments through the at least one control unit.

In an advantageous embodiment, the at least one control unit is further adapted for calculating a ratio of the sum of distances between a common node and multiple connected, distanced nodes and the sum of respective path segment lengths, wherein it is assumed that the path segments are non-sharing if the ratio is greater than 0,85 to 0,95 and particularly greater than 0,9.

In an advantageous embodiment, the selecting of multiple paths additionally comprises determining a total path length and/or expected signal attenuation and/or signal latency as a cost factor for each available path and minimizing the cost factor when selecting the multiple paths.

The invention further relates to a vehicle system comprising at least one vehicle, at least one communication station and at least one system according to the above description, wherein the start node is arranged in one of the vehicle and the communication station, and wherein the destination node is arranged in the other one of the vehicle and the communication station.

In an advantageous embodiment, the vehicle is an aircraft, and wherein the communication station is a ground station.

Brief description of the figures

In the following, the attached drawings are used to illustrate exemplary embodiments in more detail. The illustrations are schematic and not to scale. Identical reference numerals refer to identical or similar elements. They show:

Fig. 1 shows a schematic, block-oriented view of a method for establishing a communication.

Fig. 2 shows two communication paths with several nodes.

Fig. 3 shows a vehicle system having a vehicle, a ground station, base stations, and a system for establishing a communication.

Fig. 4a to 4c show different scenarios of adjacent communication paths.

Fig. 5a shows an example of several communication paths with a potential co-shared segments.

Fig. 5b shows an example of two communication paths connected to the same destination node for estimation of co-sharing.

Detailed description of exemplary embodiments

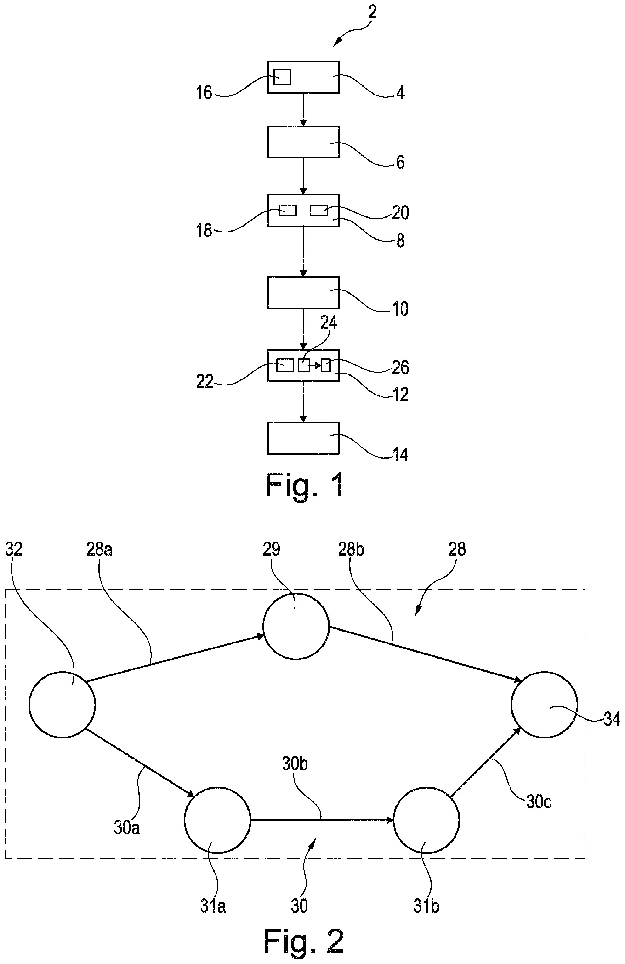

Fig. 1 shows a schematic, block-oriented illustration of a method 2 for establishing a communication through multiple distinct communication paths deployed over different network operators. It is noted that in the presented examples two communication paths are selected for clearer and easier explanation. However, the method and system according to the invention also apply to multiple paths.

The method 2 comprises the steps of collecting 4 of location information of network nodes of several available distinct paths between a source node and a destination node, comparing 6 location information of the network nodes to identify possibly co-located network nodes, determining 8 of path segment lengths of consecutive path segments between the nodes of each path, estimating 10 whether path segments of the paths intersect based on the locations of the network nodes and the path segment lengths, selecting 12 of multiple paths that do not comprise intersecting path segments and/or co-located network nodes and/or co-sharing path segments, and establishing 14 a communication between the source node and the destination node over both selected paths.

The collecting 4 of location information of network nodes may comprise querying 16 the respective nodes for location information. The determining 8 of path segment lengths may comprise measuring 18 a transmission delay along the respective path segment and/or calculating 20 a distance between consecutive nodes of the respective path segments.

In addition, the method may further comprise calculating 22 a ratio of the sum of distances between a common node and multiple connected, distanced nodes and the sum of respective path segment lengths, wherein it is assumed that the path segments are non-sharing if the ratio is greater than 0,85 to 0,95 and in particular greater than 0,9. This may be conducted in the step of selecting 12 multiple paths. Also, the selecting 12 of multiple paths may additionally comprise determining 24 a total path length and/or expected signal attenuation and/or signal latency as a cost factor for each available path and minimizing 26 the cost factor when selecting the multiple paths.

Fig. 2 demonstrates the availability of communication paths in an example, where two communication paths 28 and 30 between a source node 32 and a destination node 34 are shown. The first path 28 comprises two path segments 28a and 28b. The second path 30 comprises three path segments 30a, 30b and 30c. While the first path 28 comprises one intermediate node 29, the second path 30 comprises two intermediate nodes 31a and 31b.

The availability of the communication from the source node 32 to the destination node 34 is calculated based on availability values of the subsystems or components that compose the respective paths 28 and 30. In this example, data is transported from the source node 32 to the destination node 34 over the two disjoint paths 28 and 30. Assuming that the node availability is 1, i.e. 100%, the overall service availability A is calculated as follows:

$$A = 1 - (1 - A_{28}) \cdot (1 - A_{30}) = A_{28} + A_{30} - A_{28} \cdot A_{30}$$

wherein where $A_{28} = A_{28a} \cdot A_{28b}$ and $A_{30} = A_{30a} \cdot A_{30b} \cdot A_{30c}$. The subscript numbers indicate the respective paths or path segments.

For simplicity, the path segments 28a, 28b, 30a, 30b, 30c are assumed to have the same availability of 0.999. The total end-to-end service availability when transferring information from the source node 32 to the destination node 34 simultaneously on both communication paths 28 and 30 is 0.99999. For the same network shown in Fig. 1, if segment path 28b and segment path 30c share the same risk, such that a single failure would result in both links 28b and 30c failing simultaneously, the end-to-end service availability is calculated as follows:

$$A = (1 - (1 - A2_{8a}) \cdot (1 - A_{30a} \cdot A_{30b})) \cdot A_{28b/30c}$$

If using the same common path segment availability of 0.999 for every path segment, the service end-to-end availability is 0.9989, which is two orders of magnitude lower compared to the case, when the path segments are not affected by the same risk. This shows the importance of identifying common risks, when provisioning high availability services.

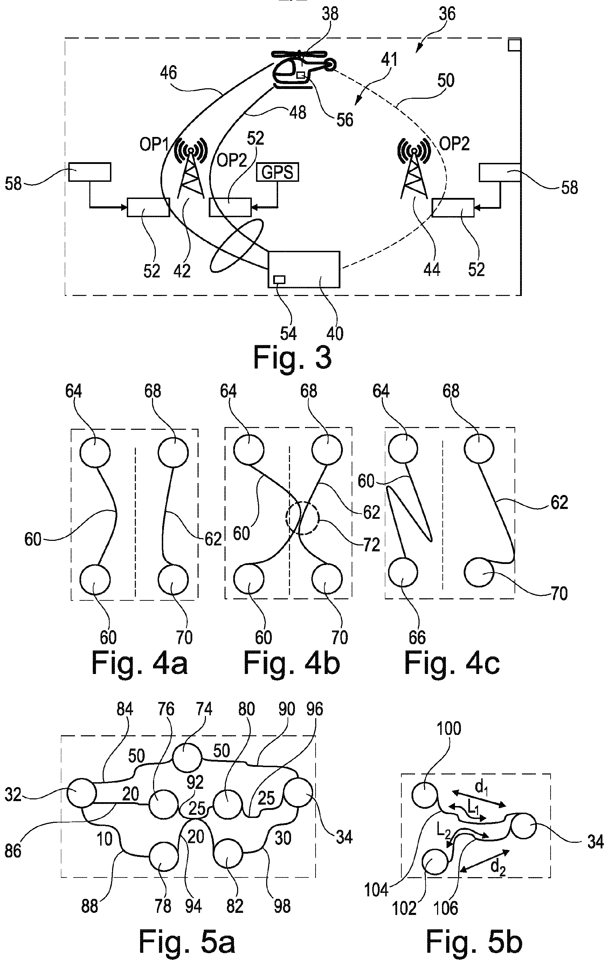

Fig. 3 shows a vehicle system 36 with a vehicle 38 exemplarily in form of a helicopter, a communication station 40 and a system 41 for establishing a communication between the vehicle 38 and the communication station 40. In this example, two base stations 42 and 44 are available, wherein it is assumed that the first base station 42 provides communication services for two network operators and that the second base station 44 only provides communication services for only one of the network operators. Hence, three different communication paths 46, 48 and 50 are available. According to the method described in combination with fig. 1, two of the paths 46, 48 and 50 are to be selected.

The vehicle 38 uses a direct air to ground (DA2G) communication service deployed using dual-connectivity, via both network operators towards the communication station 40, which may be referred to as a base station, a ground assistant, remote pilot station or air traffic control.

If both communication paths from the vehicle 38 to the communication station 40 run through the first base station 42, the service can be affected if a failure happens at the shared resource of the first base station 42, e.g. power outage. Thus, to guarantee the high availability of the service, this shared risk should be identified and only the first communication path 46, operated by a first operator OP1, and the third communication path 50, operated by a second operator OP2, should be used. As mentioned in combination with fig. 1, both base stations 42 may be equipped with network functions 52 for each operator OP1 and OP2, wherein a control unit 54 in the communication station 40 or a control unit 56 inside the vehicle 38 is able to query for information and to conduct several tasks required for the method according to the invention. The network functions 52 may exemplarily be able to communicate with a GPS module 58 for retrieving location information.

In Fig. 4a, 4b and 4c two path segments 60 and 62 are shown that extend between a first node 64 and a second node 66 as well as between a third node 68 and a fourth node 70. When conducting the method according to fig. 1 it can be determined by the step of collecting 4 of location information that all four nodes 64 to 70 are distinct nodes. Furthermore, the physical path segment lengths can be estimated, e.g. through providing a propagation delay measurement. By this, it can be determined whether the path segments 60 and 62 are most likely diverse (Fig. 4a), or may or may not be diverse (Fig. 4a and 4b). For example, if the lengths of the path segments 60 and 62 are almost identical to the distances of the respective nodes 64 and 66 or 68 and 70, the path segments 60 and 62 are most probably diverse, as shown in Fig. 4a. Due to extended lengths of the path segments 60 and 62 in Figs. 4b and 4c a reliable estimation is almost impossible without further knowledge of the course of the path segments 60 and 62. For example, in the illustration of Fig. 4b an intersection region 72 between the two path segments 60 and 62 exists. Here, both path segments 60 and 62 may share the same line duct, tunnel, bridge, or any other structural feature, wherein a single failure in this intersection region 72 may lead to damages to both path segments 60 and 62. Consequently, suitable communication paths can be chosen by selecting node pairs that are surely diverse to improve the availability.

Fig. 5a demonstrates a more complex arrangement of nodes 74, 76, 78, 80 and 82 between the start node 32 and the destination node 34, wherein a plurality of path segments 84, 86, 88, 90, 92, 94, 96 and 98 are created. Several distinct paths are possible. A general approach for maximizing the availability lies in creating a binary matrix, in which all path segments 84-98 are evaluated. In addition, a cost function optimization is provided, wherein cost values are indicated with numbers next to the path segments 84-98 in Fig. 5a.

A suitable binary matrix for evaluating the path segments may be as follows, wherein the value "1" stands for non-sharing path segment and "0" for all other states. The path segments 92 and 94 are not clearly distinct, such that a "0" is entered for the combinations of path segments 92 and 94. However, all other path segments 84-90 and 96-98 are likely non-sharing.

| path segment | 84 | 86 | 88 | 90 | 92 | 94 | 96 | 98 |
|---|---|---|---|---|---|---|---|---|
| 84 | - | 1 | 1 | 1 | 1 | 1 | 1 | 1 |
| 86 | 1 | - | 1 | 1 | 1 | 1 | 1 | 1 |
| 88 | 1 | 1 | - | 1 | 1 | 1 | 1 | 1 |

(continued)

| path segment | 84 | 86 | 88 | 90 | 92 | 94 | 96 | 98 |
|---|---|---|---|---|---|---|---|---|
| 90 | 1 | 1 | 1 | - | 1 | 1 | 1 | 1 |
| 92 | 1 | 1 | 1 | 1 | - | 0 | 1 | 1 |
| 94 | 1 | 1 | 1 | 1 | 0 | - | 1 | 1 |
| 96 | 1 | 1 | 1 | 1 | 1 | 1 | - | 1 |
| 98 | 1 | 1 | 1 | 1 | 1 | 1 | 1 | - |

The source node 32 and the destination node 34 have to be connected with two distinct paths to increase the availability. If an objective function with cost minimization without constraints is used, i.e. without excluding possibly shared path segments, a first path, i.e. a working path, will be a path running from the start node 32 to node 78 through segment path 88, afterwards to node 82 through the path segment 94 as well as to the destination node 34 through path segment 98, with a cost value of "60". A protection path would result in a path running from the start node 32 to node 76 through segment path 86, afterwards to node 80 through the path segment 92 as well as to the destination node 34 through path segment 96, with a cost value of "70".

However, if the same objective function is used, but the constraint is added to avoid shared path segments, the working path will be start node 32 - node 78 - node 82 - destination node 34 with a cost value of "60". The protection path would be start node 32 - node 74 - destination node 34 with a cost value of "100".

Still further, regarding the estimation stated in connection with Fig. 4a, i.e. that the path segments are most probably diverse if the lengths of path segments are almost identical to the distances of the respective nodes, it is further pointed to Fig. 5b. Here, a first node 100 and a second node 102 together with the destination node 34 are shown. A first path segment 104 having a first path length l1 extends from the first node 100 to the destination node 34. A second path segment 106 having a second path length l2 extends from the second node 102 to the destination node 34. The first node 100 is distanced from the second node 102. A first distance d1 refers to the distance between the first node 100 and the destination node 34. A second distance d2 refers to the distance between the second node 102 and the destination node 34. If

$$\frac{d_1 + d_2}{l_1 + l_2} > 0{,}9,$$

i.e. if the sum of path segment lengths are almost identical to the sum of node distances, it may be assumed that the first and second path segments 104 and 106 are diverse. As explained above, this assumption may apply to a ratio greater than 0,85 to 0,95 and in particular greater than 0,9.

Reference numerals

| | |
|---|---|
| 2 | method |
| 4 | collecting of location information |
| 6 | comparing location information |
| 8 | determining of path segment lengths |
| 10 | estimating of path segments intersecting |
| 12 | selecting multiple paths |
| 14 | establishing communication |
| 16 | querying for location information |
| 18 | measuring a transmission delay |
| 20 | calculating a distance |
| 22 | calculating a ratio |
| 24 | determining local path length/attenuation/latency |
| 26 | minimizing cost factor |
| 28 | communication path |
| 28a, 28b | path segments |

| 29 | intermediate node |
|---|---|
| 30 | communication path |
| 30a, 30b, 30c | path segments |
| 31a, 31b | intermediate node |
| 32 | source node |
| 34 | destination node |
| 36 | vehicle system |
| 38 | vehicle |
| 40 | communication station |
| 41 | system for establishing communication |
| 42 | first base station |
| 44 | first base station |
| 46 | communication path |
| 48 | communication path |
| 50 | communication path |
| 52 | network function |
| 54 | control unit |
| 56 | control unit |
| 58 | GPS module |
| 60 | path segment |
| 62 | path segment |
| 64 | first node |
| 66 | second node |
| 68 | third node |
| 70 | fourth node |
| 72 | intersection region |
| 74 | node |
| 76 | node |
| 78 | node |
| 80 | node |
| 82 | node |
| 84 | path segment |
| 86 | path segment |
| 88 | path segment |
| 90 | path segment |
| 92 | path segment |
| 94 | path segment |
| 96 | path segment |
| 98 | path segment |
| 100 | first node |
| 102 | second node |
| 104 | first path segment |
| 106 | second path segment |

| OP1 | First network operator |
|---|---|
| OP2 | second network operator |

| d1 | first distance |
|---|---|
| d2 | second distance |
| l1 | first path segment length |
| l2 | second path segment length |

**Claims**

1. Method (2) for establishing a communication through multiple distinct communication paths (28, 30, 46, 48, 50) deployed over different network operators (OP1, OP2), comprising the steps:

collecting (4) of location information of network nodes (29, 31a, 31b, 64, 66, 68, 70, 74, 76, 78, 80, 82, 100, 102) of several available distinct paths (28, 30, 46, 48, 50) between a source node (32) and a destination node (34),

comparing (6) location information of the network nodes (29, 31a, 31b, 64, 66, 68, 70, 74, 76, 78, 80, 82, 100, 102) to identify possibly co-located network nodes (29, 31a, 31b, 64, 66, 68, 70, 74, 76, 78, 80, 82, 100, 102),

determining (8) of path segment lengths of consecutive path segments (28a, 28b, 30a, 30b, 30c, 60, 62, 84, 86, 88, 90, 92, 94, 96, 98, 104, 106) between the nodes (29, 31a, 31b, 64, 66, 68, 70, 74, 76, 78, 80, 82, 100, 102) of each path,

estimating whether path segments (28a, 28b, 30a, 30b, 30c, 60, 62, 84, 86, 88, 90, 92, 94, 96, 98, 104, 106) of the paths (28, 30, 46, 48, 50) intersect based on the locations of the network nodes (29, 31a, 31b, 64, 66, 68, 70, 74, 76, 78, 80, 82, 100, 102) and the path segment lengths,

selecting of multiple paths (28, 30, 46, 48, 50) that do not comprise intersecting path segments (28a, 28b, 30a, 30b, 30c, 60, 62, 84, 86, 88, 90, 92, 94, 96, 98, 104, 106) and/or co-located network nodes (29, 31a, 31b, 64, 66, 68, 70, 74, 76, 78, 80, 82, 100, 102) and/or co-sharing path segments (28a, 28b, 30a, 30b, 30c, 60, 62, 84, 86, 88, 90, 92, 94, 96, 98, 104, 106), and

establishing a communication between the source node (32) and the destination node (34) over both selected paths (28, 30, 46, 48, 50).

2. Method according to claim 1,
wherein the collecting (4) of location information of network nodes (29, 31a, 31b, 64, 66, 68, 70, 74, 76, 78, 80, 82, 100, 102) comprises querying (16) the respective nodes (29, 31a, 31b, 64, 66, 68, 70, 74, 76, 78, 80, 82, 100, 102) for location information.

3. Method according to claim 1 or 2,
wherein the determining (8) of path segment lengths comprises measuring (18) a transmission delay along the respective path segment (28a, 28b, 30a, 30b, 30c, 60, 62, 84, 86, 88, 90, 92, 94, 96, 98, 104, 106).

4. Method according to any of the preceding claims,
wherein the determining (8) of path segment lengths comprises calculating (20) a distance between consecutive nodes (29, 31a, 31b, 64, 66, 68, 70, 74, 76, 78, 80, 82, 100, 102) of the respective path segments (28a, 28b, 30a, 30b, 30c, 60, 62, 84, 86, 88, 90, 92, 94, 96, 98, 104, 106).

5. Method according to claim 3 and 4, further comprising

calculating (22) a ratio of the sum of distances ($d_1$, $d_2$) between a common node (29, 31a, 31b, 32, 34, 64, 66, 68, 70, 74, 76, 78, 80, 82, 100, 102) and multiple connected, distanced nodes (29, 31a, 31b, 64, 66, 68, 70, 74, 76, 78, 80, 82, 100, 102) and the sum of respective path segment lengths ($l_1$, $l_2$),

wherein it is assumed that the path segments (28a, 28b, 30a, 30b, 30c, 60, 62, 84, 86, 88, 90, 92, 94, 96, 98, 104, 106) are non-sharing if the ratio is greater than 0,85 to 0,95 and in particular greater than 0,9.

6. Method according to any of the preceding claims,
wherein the selecting of multiple paths (28, 30, 46, 48, 50) additionally comprises determining a total path length and/or expected signal attenuation and/or signal latency as a cost factor for each available path and minimizing the cost factor when selecting the multiple paths.

7. System (41) for establishing a communication through multiple distinct communication paths (28, 30, 46, 48, 50) deployed over different network operators, comprising a start node (32) and a destination node (34),
wherein each of the start node (32) and the destination node (34) comprises at least one communication device adapted for establishing a communication between the source node (32) and the destination node (34) over multiple paths (28, 30, 46, 48, 50),
wherein each of the start node (32) and the destination node (34) comprises a control unit (54, 56),
wherein at least one of the control units (54, 56) is designed for:

collecting (4) of location information of network nodes (29, 31a, 31b, 64, 66, 68, 70, 74, 76, 78, 80, 82, 100, 102) of several available distinct paths (28, 30, 46, 48, 50) between the source node (32) and the destination node (34),

comparing location information of the network nodes (29, 31a, 31b, 64, 66, 68, 70, 74, 76, 78, 80, 82, 100, 102) to identify possibly co-located network nodes (29, 31a, 31b, 64, 66, 68, 70, 74, 76, 78, 80, 82, 100, 102),

determining of path segment lengths of consecutive path segments (28a, 28b, 30a, 30b, 30c, 60, 62, 84, 86, 88, 90, 92, 94, 96, 98, 104, 106) between the nodes (29, 31a, 31b, 64, 66, 68, 70, 74, 76, 78, 80, 82, 100, 102) of each path (28, 30, 46, 48, 50),

estimating whether path segments (28a, 28b, 30a, 30b, 30c, 60, 62, 84, 86, 88, 90, 92, 94, 96, 98, 104, 106) of the paths (28, 30, 46, 48, 50) intersect based on the locations of the network nodes (29, 31a, 31b, 64, 66, 68, 70, 74, 76, 78, 80, 82, 100, 102) and the path segment lengths, and

selecting multiple paths (28, 30, 46, 48, 50), through which the communication is to be established, that do not comprise intersecting path segments (28a, 28b, 30a, 30b, 30c, 60, 62, 84, 86, 88, 90, 92, 94, 96, 98, 104, 106) and/or co-located network nodes (29, 31a, 31b, 64, 66, 68, 70, 74, 76, 78, 80, 82, 100, 102) and/or co-sharing path segments (28a, 28b, 30a, 30b, 30c, 60, 62, 84, 86, 88, 90, 92, 94, 96, 98, 104, 106).

8. System (41) according to claim 7, wherein the collecting (4) of location information of network nodes (29, 31a, 31b, 64, 66, 68, 70, 74, 76, 78, 80, 82, 100, 102) comprises querying the respective nodes (29, 31a, 31b, 64, 66, 68, 70, 74, 76, 78, 80, 82, 100, 102) for location information through the at least one control unit (54, 56).

9. System (41) according to claim 7 or 8,
wherein the determining (8) of path segment lengths comprises measuring (18) a transmission delay along the respective path segment (28a, 28b, 30a, 30b, 30c, 60, 62, 84, 86, 88, 90, 92, 94, 96, 98, 104, 106) through the at least one control unit (54, 56).

10. System (41) according to any of the preceding claims 7 to 9,
wherein the determining of path segment lengths comprises calculating a distance between consecutive nodes (29, 31a, 31b, 64, 66, 68, 70, 74, 76, 78, 80, 82, 100, 102) of the respective path segments (28a, 28b, 30a, 30b, 30c, 60, 62, 84, 86, 88, 90, 92, 94, 96, 98, 104, 106) through the at least one control unit (54, 56).

11. System (41) according to claim 9 and 10, wherein the at least one control unit (54, 56) is further adapted for calculating (22) a ratio of the sum of distances ($d_1$, $d_2$) between a common node (29, 31a, 31b, 32, 34, 64, 66, 68, 70, 74, 76, 78, 80, 82, 100, 102) and multiple connected, distanced nodes (29, 31a, 31b, 64, 66, 68, 70, 74, 76, 78, 80, 82, 100, 102) and the sum of respective path segment lengths ($l_1$, $l_2$), wherein it is assumed that the path segments (28a, 28b, 30a, 30b, 30c, 60, 62, 84, 86, 88, 90, 92, 94, 96, 98, 104, 106) are non-sharing if the ratio is greater than 0,85 to 0,95 and in particular greater than 0,9.

12. System (41) according to any of the preceding claims 7 to 11,
wherein the selecting of multiple paths (28, 30, 46, 48, 50) additionally comprises determining a total path length and/or expected signal attenuation and/or signal latency as a cost factor for each available path (28, 30, 46, 48, 50) and minimizing the cost factor when selecting the multiple paths (28, 30, 46, 48, 50).

13. Vehicle system (36), comprising at least one vehicle (38), at least one communication station (40) and at least one system (41) according to any of the claims 7 to 12, wherein the start node (32) is arranged in one of the vehicle (38) and the communication station (40), and wherein the destination node (34) is arranged in the other one of the vehicle (38) and the communication station 40).

14. Vehicle system (36) according to claim 13, wherein the vehicle (38) is an aircraft (38), and wherein the communication station (40) is a ground station.

Fig. 1

Fig. 2

Fig. 3

Fig. 4a          Fig. 4b          Fig. 4c

Fig. 5a          Fig. 5b

Europäisches
Patentamt

European
Patent Office

Office européen
des brevets

# EUROPEAN SEARCH REPORT

Application Number

EP 22 17 4623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/191545 A1 (PIEDA PETER STEVEN [CA] ET AL) 19 December 2002 (2002-12-19) | 1-4, 6-10,12 | INV. H04B7/185 |
| A | * figure 2 *<br>* paragraph [0001] *<br>* paragraph [0008] - paragraph [0010] *<br>* paragraph [0014] - paragraph [0015] *<br>* paragraph [0027] - paragraph [0036] *<br>* paragraph [0041] - paragraph [0042] *<br>* paragraph [0046] - paragraph [0074] *<br>* paragraph [0077] - paragraph [0092] *<br>----- | 5,11,13, 14 | H04L45/00 H04W40/00 H04L45/24 |
| A | US 2011/038254 A1 (HASHIGUCHI TOMOHIRO [JP] ET AL) 17 February 2011 (2011-02-17)<br>* paragraph [0009] *<br>* paragraph [0043] - paragraph [0045] *<br>* paragraph [0059] - paragraph [0064] *<br>* paragraph [0116] - paragraph [0125] *<br>----- | 1-14 | |
| A | HYUN WOO OH ET AL: "An explicit disjoint multipath algorithm for Cost efficiency in wireless sensor networks",<br>PERSONAL INDOOR AND MOBILE RADIO COMMUNICATIONS (PIMRC), 2010 IEEE 21ST INTERNATIONAL SYMPOSIUM ON, IEEE, PISCATAWAY, NJ, USA,<br>26 September 2010 (2010-09-26), pages 1899-1904, XP031837888,<br>ISBN: 978-1-4244-8017-3<br>* the whole document *<br>----- | 1-14 | |

TECHNICAL FIELDS SEARCHED (IPC)

H04B
H04L
H04W

The present search report has been drawn up for all claims

| Place of search | Date of completion of the search | Examiner |
|---|---|---|
| The Hague | 31 October 2022 | Arroyo Valles, |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 4623

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2022

| Patent document cited in search report | | Publication date | Patent family member(s) | | Publication date |
|---|---|---|---|---|---|
| US 2002191545 | A1 | 19-12-2002 | US | 2002191545 A1 | 19-12-2002 |
| | | | WO | 02103965 A1 | 27-12-2002 |
| US 2011038254 | A1 | 17-02-2011 | JP | 5223815 B2 | 26-06-2013 |
| | | | JP | 2011041017 A | 24-02-2011 |
| | | | US | 2011038254 A1 | 17-02-2011 |

EPO FORM P0459

For more details about this annex : see Official Journal of the European Patent Office, No. 12/82